# EUROPEAN PATENT APPLICATION

(11) **EP 4 428 269 A1**
(43) Date of publication of application: **11.09.2024**
(21) Application number: 23743456.8
(22) Date of filing: 18.01.2023
(51) Int. Cl.: C25B 15/08, C25B 9/19, C25B 1/23, C25B 1/02

(54) **CARBON DIOXIDE ELECTROLYSIS DEVICE AND METHOD**

(30) Priority: 18.01.2022 KR 20220007386
(71) Applicant: LG Chem, Ltd., Yeongdeungpo-gu Seoul 07336 (KR)
(72) Inventor: NOH, Tai Min, Daejeon 34122 (KR); LEE, Jong Jin, Daejeon 34122 (KR); KIM, Tae Keun, Daejeon 34122 (KR); KIM, Kwang Hwan, Daejeon 34122 (KR); NOH, Tae Geun, Daejeon 34122 (KR)
(74) Representative: Hoffmann Eitle
(86) International application number: PCT/KR2023/000855
(87) International publication number: WO 2023/140609

(57) **Abstract**

The present invention relates to a carbon dioxide electrolysis device including: a carbon dioxide electrolysis cell including an anode, a cathode, an electrolyte, and a membrane disposed between the anode and the cathode; a supply line configured to supply gaseous carbon dioxide and water vapor to the cathode; and a discharge line configured to discharge, into the outside of the cell, water vapor and a product produced by the electrolysis reaction of the carbon dioxide inside the carbon dioxide electrolysis cell, wherein the discharge line includes a condensation part configured to condense the water vapor discharged through the discharge line.

## Description

### Cross-reference to Related Applications

This application claims the benefit of Korean Patent Application No. 10-2022-0007386, filed on January 18, 2022, the disclosure of which is incorporated herein in its entirety by reference.

### Technical Field

The present invention relates to a carbon dioxide electrolysis device and a carbon dioxide electrolysis method.

### BACKGROUND ART

Carbon dioxide is a greenhouse gas that causes global warming and is an object to be reduced. A method such as capture, chemical conversion, or electrochemical conversion is known as a method for reducing carbon dioxide. The electrochemical conversion method among these can precisely control components in order to produce another synthetic gas, and thus can obtain more economic gains than simply removing carbon dioxide.

The process of electrochemically decomposing carbon dioxide is similar to water electrolysis technology, but since the activity of the electrochemical reaction is improved in a strong base condition, a certain concentration of an aqueous KOH solution is generally used as an electrolyte. When an electric current is applied while supplying water to an anode, the water decomposes into hydrogen ions and electrons with oxygen gas generation. The electrons move to the cathode through an external conducting wire, and the hydrogen ions move to the cathode through an ion-selective membrane. In this case, the moved electrons react with the carbon dioxide and the water supplied to the cathode, thereby decomposing into carbon monoxide and hydroxide ions (OH-), and the resulting hydroxide ions are electrically neutral by reacting with hydrogen ions (H⁺) of the anode to produce water. An electrochemical decomposition reaction of carbon dioxide is completed through the above process. In this case, the water supplied together with carbon dioxide reacts with the moved electrons, separately from the carbon monoxide production reaction, to be electrolyzed to generate hydrogen gas and simultaneously produce hydroxide ions. The reaction between the water and the electrons may be said to be a relationship of competition reaction with the carbon monoxide production reaction. Since the reactions above are electrochemical reactions, it is possible to easily control the amount of carbon monoxide produced and the hydrogen/carbon dioxide ratio by adjusting the voltage.

Meanwhile, when a cation-conducting membrane is used as the ion-selective membrane, K+ ions contained in the electrolyte are transferred to the cathode through the membrane, wherein the K+ ions react with the carbon dioxide of the cathode, and a salt such as potassium carbonate (K₂CO₃) is precipitated. In addition, when an anion-conducting membrane is used as the ion-selective membrane, hydroxide ions mainly move, but cations such as K+ ions also partially move, and in this case, salt is produced as in the case of using the cation-conducting membrane.

The salt produced and precipitated at the cathode above is accumulated inside the device as the carbon dioxide electrolysis process proceeds. Thus, the salt accumulated inside the device causes to block the inlet and the outlet for supplying and discharging carbon dioxide, thereby reducing the productivity and efficiency of the carbon dioxide electrolysis device, and making it impossible to continuously drive for a long period of time. In addition, there is a limitation that it is inefficient in terms of equipment facilities and operation because an additional device or operation is required to remove the salt.

(Paten Document 001) KR 10-1793711 B1

### DISCLOSURE OF THE INVENTION

### TECHNICAL PROBLEM

The problem to be solved in the present invention is to dissolve and remove salts, by water, generated from an electrolyte during electrolysis of carbon dioxide.

That is, an aspect of the present invention provides a carbon dioxide electrolysis device and a carbon dioxide electrolysis method which can generate water by condensing water vapor when the water vapor supplied together with carbon dioxide is discharged together with the product of an electrolysis reaction during the electrolysis of carbon dioxide, and can dissolve and remove a salt, which is produced by side reactions of the electrolysis, by the water.

### TECHNICAL SOLUTION

The present invention provides a carbon dioxide electrolysis device and a carbon dioxide electrolysis method.
(1) According to an aspect of the present invention, there is provided a carbon dioxide electrolysis device including: a carbon dioxide electrolysis cell including an anode, a cathode, an electrolyte, and a membrane disposed between the anode and the cathode; a supply line configured to supply gaseous carbon dioxide and water vapor to the cathode; and a discharge line configured to discharge, into the outside of the carbon dioxide electrolysis cell, water vapor and a product produced by the electrolysis reaction of the carbon dioxide inside the carbon dioxide electrolysis cell, wherein the discharge line includes a condensation part configured to condense the water vapor discharged through the discharge line.
(2) In (1) above of the present invention, there is provided the carbon dioxide electrolysis device, wherein the gaseous carbon dioxide is supplied while including the water vapor.
(3) In (1) or (2) above of the present invention, there is provided the carbon dioxide electrolysis device, wherein the water vapor supplied through the supply line has a temperature of 40 °C to 60 °C.
(4) In any one of (1) to (3) above of the present invention, there is provided the carbon dioxide electrolysis device, wherein the condensation part is exposed to the outside of the carbon dioxide electrolysis cell.
(5) In any one of (1) to (4) above of the present invention, there is provided the carbon dioxide electrolysis device, wherein the condensation part includes a storage part configured to store water formed by condensing the water vapor discharged through the discharge line.
(6) In any one of (1) to (5) above of the present invention, there is provided the carbon dioxide electrolysis device, wherein the discharge line includes a first line which transfers the product and the water vapor discharged through the discharge line from the carbon dioxide electrolysis cell to the condensation part, and a second line which discharges the product from the condensation part into the outside.
(7) In (6) above of the present invention, there is provided the carbon dioxide electrolysis device, wherein the condensation part is connected so that a step is formed between the first line and the second line.
(8) In (7) above of the present invention, there is provided the carbon dioxide electrolysis device, wherein the second line is disposed higher than the first line by the step.
(9) According to another aspect of the present invention, there is provided a carbon dioxide electrolysis method including the steps of: (S1) supplying gaseous carbon dioxide and water vapor to a cathode of a carbon dioxide electrolysis cell including an anode, the cathode, an electrolyte, and a membrane; (S2) electrolyzing the carbon dioxide supplied to the cathode in step (S1) above; (S3) discharging, into the outside of the carbon dioxide electrolysis cell, the product produced by the electrolysis in step (S2) above and the water vapor supplied in step (S1) above; and (S4) condensing the water vapor discharged in step (S3) above.
(10) In (9) above of the present invention, there is provided the carbon dioxide electrolysis method, wherein water formed by condensing the water vapor discharged in step (S4) above dissolves the salt produced from the electrolyte by the electrolysis in step (S2) above.
(11) In (10) above of the present invention, there is provided the carbon dioxide electrolysis method, wherein the salt is produced by the reaction of the electrolyte with the supplied carbon dioxide.
(12) In (10) or (11) above of the present invention, there is provided the carbon dioxide electrolysis method, wherein the salt is KHCO₃ and K₂CO₃.

### ADVANTAGEOUS EFFECTS

According to the carbon dioxide electrolysis device and method of the present invention, water can be produced by using water vapor, as it is, supplied together with carbon dioxide, during carbon dioxide electrolysis, and the salt can be continuously removed by using the produced water without an additional salt removal device or salt removal operation.

Also, because the carbon dioxide electrolysis device of the present invention does not require an additional salt removal device and an additional salt removal operation, there is no need for the salt removal device and space for removing the salt, and thus the volume of the carbon dioxide electrolysis device may be reduced.

Also, according to the carbon dioxide electrolysis device and method of the present invention, the salt can be continuously removed even without an additional salt removal device or salt removal operation, and thus the inlet and the outlet of the carbon dioxide electrolysis device are not blocked by the salt, so that the carbon dioxide electrolysis device can be smoothly and continuously driven without voltage changes, and the amount of production and electrolysis efficiency even with continuous driving are not reduced.

Also, the carbon dioxide electrolysis device of the present invention can easily condense water and dissolve salt through the special structure of the discharge line, and thus there is no need to add an additional condenser or an additional water spray device, and installation and maintenance are easily carried out, which is efficient in terms of structure facilities.

### BRIEF DESCRIPTION OF THE DRAWINGS

FIG. 1 is a cross-sectional view of a carbon dioxide electrolysis device according to an embodiment of the present invention.

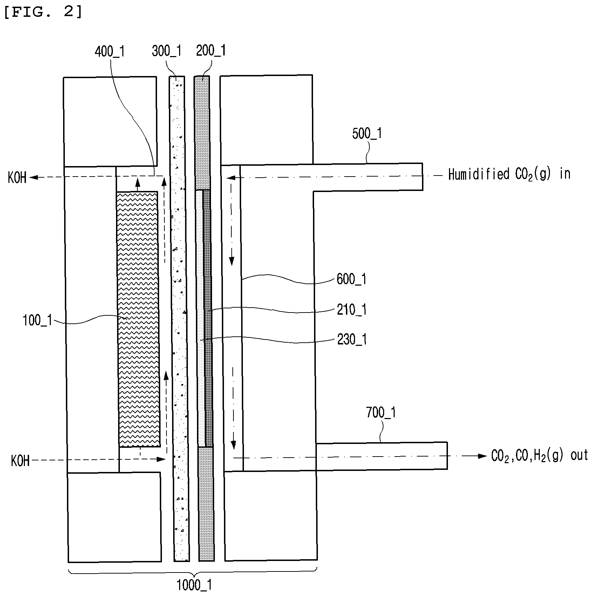

FIG. 2 is a cross-sectional view of a conventional carbon dioxide electrolysis device.
FIG. 3 is a graph showing voltage changes over time of Examples 1 and 2.
FIG. 4 is a graph showing a voltage change over time of Example 3.
FIG. 5 is a graph showing voltage changes over time of Examples 4, 5, 6 and 7.
FIG. 6 is a graph showing voltage changes over time of Examples 8 and 9.
FIG. 7 is a graph showing a voltage change over time of Comparative Example 1.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### Carbon Dioxide Electrolysis Device

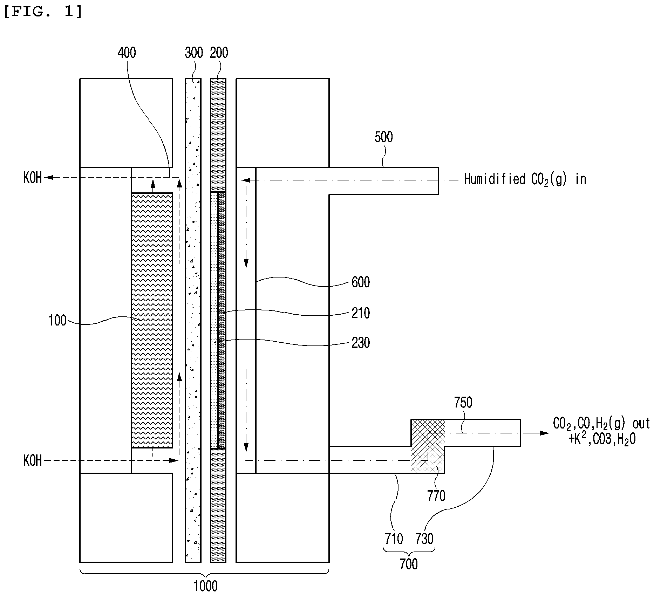

FIG. 1 is a cross-sectional view for describing a carbon dioxide electrolysis device according to an embodiment of the present invention.

Referring to FIG. 1, the carbon dioxide electrolysis device of the present invention may include: a carbon dioxide electrolysis cell 1000 including an anode 100, a cathode 200, an electrolyte 400, and a membrane 300 disposed between the anode 100 and the cathode 200; a supply line 500 configured to supply gaseous carbon dioxide and water vapor to the cathode 200; and a discharge line 700 configured to discharge, into the outside of the cell, water vapor and a product produced by the electrolysis reaction of the carbon dioxide inside the carbon dioxide electrolysis cell 1000, wherein the discharge line 700 may include a condensation part 750 configured to condense the water vapor discharged through the discharge line 700.

According to an embodiment of the present invention, the carbon dioxide electrolysis cell 1000 is a device for converting carbon dioxide into carbon monoxide by injecting carbon dioxide and may include an anode 100, a cathode 200, an electrolyte 400, and a membrane 300. Electrolysis means that a DC voltage is applied to a decomposition reaction that does not occur spontaneously to cause an oxidation-reduction reaction, resulting in decomposition of materials. The anode 100 is an oxidation electrode, which generates oxygen by oxidizing water, and at the time, hydrogen ions are produced. The hydrogen ions produced in the anode 100 may be transferred to the cathode 200 through the electrolyte 400, and the cathode 200 is a reduction electrode, which may produce a product by reacting a reactant introduced into the cathode 200 with electrons and hydrogen ions transferred from the anode 100. In addition, the membrane 300 may be disposed between the anode 100 and the cathode 200. The membrane 300 may be composed of an inactive material that does not participate in itself in an electrochemical reaction, but may provide a path through which ions may move between the anode 100 and the cathode 200, and may serve to separate physical contact between the anode 100 and the cathode 200.

In addition, each of the anode 100 and the cathode 200 of the carbon dioxide electrolysis cell 1000 of the present invention may include a catalyst layer. In addition, carbon dioxide supplied together with water vapor in the cathode region generates a reduction product by an electroreduction reaction on the surface of the cathode 200. Accordingly, the cathode 200 may include a gas diffusion layer 210 in order to uniformly supply the humidified carbon dioxide gas to the cathode region. When the cathode 200 includes the hydrophobic gas diffusion layer 210, the supplied carbon dioxide may be smoothly diffused, distributed, and supplied to a catalyst layer 230 of the cathode. In addition, the hydrophobic gas diffusion layer 210 effectively prevents moisture condensation so that the supply of carbon dioxide is continuously uniform and at the same time, the electrolysis reaction may be smoothly performed. In addition, the catalyst layer 230 may have a surface such as a porous structure so that gas permeation characteristics are well exhibited on the surface.

According to an embodiment of the present invention, the anode 100 may include a catalyst having activity in the electrolysis of water, and the catalyst layer of the anode 100 may include at least one selected from the group consisting of Pt, Au, Pd, Ir, Ag, Rh, Ru, Ni, Al, Mo, Cr, Cu, Ti, W, an alloy thereof, or a mixed metal oxide, for example, Ta₂0₅, Ir0₂, and the like, for oxygen generation reaction. Specifically, the anode 100 in the carbon dioxide electrolysis device of the present invention may include nickel (Ni) coated with ruthenium oxide (RuO₂) and cerium oxide (CeO₂).

In addition, since the carbon dioxide reduction reaction occurring in the cathode 200 competes with the hydrogen generation reaction, the cathode 200 may include a catalyst which has a high voltage required for the hydrogen generation reaction and exhibits activity in the carbon dioxide reduction reaction. The catalyst layer 230 of the cathode 200 may include at least one selected from the group consisting of Sn, Sn alloy, Al, Au, Ag, C, Cd, Co, Cr, Cu, Cu alloy, Ga, Hg, In, Mo, Nb, Ni, NiCo₂O₄, Ni alloy, Ni-Fe alloy, Pb, Rh, Ti, V, W, Zn, and a mixture thereof, for the hydrogen generation reaction. Specifically, the cathode 200 in the carbon dioxide electrolysis device of the present invention may include silver (Ag) .

In addition, the membrane 300 may include a cation exchange membrane (CEM) or an anion exchange membrane (AEM).

In addition, the electrolyte 400 may be selected from the group consisting of KHCO₃, K₂CO₃, KOH, KCl, KClO₄, K₂SiO₃, Na₂SO₄, NaNO₃, NaCl, NaF, NaClO₄, CaCl₂, guanidinium cation, H⁺ cation, alkali metal cation, ammonium cation, alkylammonium cation, halide ion, alkyl amine, borate, carbonate, guanidinium derivative, nitrite, nitrate, phosphate, polyphosphate, perchlorate, silicate, sulfate, tetraalkyl ammonium salt, or an aqueous solution containing a mixture thereof, and the electrolyte 400 of the carbon dioxide electrolysis device of the present invention may include KOH.

In addition, the gas diffusion layer 210 may use a porous body using a carbon material such as carbon fiber fabric, carbon fiber felt, or carbon fiber paper, or a metal porous body formed of a thin metal plate having a net structure, such as expanded metal or metal mesh, and the gas diffusion layer in the carbon dioxide electrolysis device of the present invention may use carbon fiber fabric.

According to an embodiment of the present invention, the carbon dioxide electrolysis device according to the present invention may include a supply line 500 which supplies gaseous carbon dioxide and water vapor to the cathode 200, a transfer line 600 which transfers the supplied carbon dioxide and water vapor to the cathode 200 so that the supplied carbon dioxide and water vapor move to the region of the cathode 200 to participate in the reaction with minimal resistance, and a discharge line 700 which discharges, into the outside of the cell, water vapor and a product produced by the reaction.

The length, material, and shape of the supply line 500, the transfer line 600, and the discharge line 700 are not limited as long as they have a function to smoothly transfer carbon dioxide and water vapor. The shape of the transfer line 600 may include a parallel structure in which straight lines are disposed in parallel to each other or a serpentine structure having a repeated "S" shape. The supply line and the discharge line may be connected to the carbon dioxide electrolysis cell 1000, and the transfer line 600 may be disposed adjacent to the cathode 200 inside the carbon dioxide electrolysis cell 1000. However, as described below, the discharge line 700 may include a condensation part 750, and thus may be preferably positioned outside the carbon dioxide electrolysis cell 1000 and connected to the carbon dioxide electrolysis cell 1000.

According to an embodiment of the present invention, the carbon dioxide electrolysis device of the present invention may include the condensation part 750 in the discharge line 700. The condensation part 750 may serve to produce water by condensing the water vapor when the water vapor supplied through the supply line 500 is passed through a transfer line and discharged through the discharge line 700.

Meanwhile, the electrolyte 400-1 used during the electrolysis reaction in the carbon dioxide electrolysis device is present in a state of positive ions and negative ions, and when some of the positive ions move to the region of the cathode through the membrane 300-1, the positive ions react with carbon dioxide supplied to the region of the cathode to form and precipitate salts. In the case of the conventional carbon dioxide electrolysis device, the salt may not be removed and may be continuously accumulated in the carbon dioxide electrolysis cell, the supply line 500-1, and the discharge line 700-1, thereby blocking the supply line 500-1 and the discharge line 700-1. In this case, the carbon dioxide electrolysis device may not be continuously driven, and there may be a setback in experiments and research that require a long-term evaluation. Therefore, in order to remove such a salt, the carbon dioxide electrolysis device of the present invention may serve to dissolve the salt by the condensation part 750, which is positioned in the discharge line 700, converting the supplied water vapor into water, and thus the conventional limitations may be solved.

According to an embodiment of the present invention, the gaseous carbon dioxide may be supplied while including the water vapor. Since this may supply a larger amount than when the carbon dioxide is supplied alone, the efficiency of the carbon dioxide electrolysis device may be improved. Specifically, the carbon dioxide and the water vapor may be bubbled through an additional humidifier and supplied while including the water vapor, or the carbon dioxide and the water vapor may be supplied while the carbon dioxide and the water vapor are in contact with each other and mixed through an additional device. In this case, as long as the carbon dioxide can be supplied to the cathode 200 through the supply line 500 in a humidified state, the method of supplying the humidified carbon dioxide is not limited.

When the carbon dioxide is supplied in a humidified state, the water vapor may be converted into water through the condensation part 750 included in the discharge line 700, and thus there is an effect of reducing the volume of the carbon dioxide electrolysis device and simplifying the same.

According to an embodiment of the present invention, the water vapor supplied through the supply line 500 may have a temperature of 40 °C to 60 °C, specifically, at least 40 °C, at least 43 °C, at least 46 °C, at least 49 °C, and at most 60 °C, at most 57 °C, at most 54 °C, or at most 51 ° C. The carbon dioxide electrolysis device may be operated while maintaining a temperature of 40 °C to 60 °C, but the temperature of the device may be increased by heat or the temperature of feed in the carbon dioxide electrolysis device. The carbon dioxide electrolysis device should be operated in the above temperature range, and thus the electrolysis efficiency is maintained, and the production amount of the product is not reduced. Therefore, when the temperature of the supplied water vapor satisfies the above range, the carbon dioxide electrolysis device maintains the proper temperature, and thus there are effects of maintaining the production amount of the product and increasing the electrolysis efficiency.

According to an embodiment of the present invention, the condensation part 750 may be exposed to the outside of the carbon dioxide electrolysis cell 1000. As described above, the condensation part 750 may serve to condense the water vapor supplied through the supply line 500 and convert the condensed water vapor into water, and the condensation part 750 may be included in the discharge line 700 connected to the carbon dioxide electrolysis cell 1000. In addition, the condensation part 750 is exposed to the outside of the carbon dioxide electrolysis cell 1000 to be in contact with external air at room temperature, and may naturally condense the water vapor by the atmosphere at room temperature without an additional condenser or heat exchanger. In the carbon dioxide electrolysis device of the present invention, the condensation part 750 is exposed to the outside of the carbon dioxide electrolysis cell 1000, so that no additional facilities for condensation are required, the volume of the device may be reduced, and no additional energy is required.

According to an embodiment of the present invention, the condensation part 750 may include a storage part 770 in which water formed by condensing water vapor discharged through the discharge line 700 is stored. The condensation part condenses the water vapor discharged through the discharge line 700 to form water, and the formed water dissolves and removes a salt which will be described later. Accordingly, when the formed water is stored in a certain space and the salt is discharged through the discharge line 700, a space in which the salt may be in contact with the water and dissolved may be required, and the carbon dioxide electrolysis device of the present invention includes the storage part 770 in the condensation part 750 included in the discharge line 700, thereby storing the condensed water and dissolving the salt in the storage part 770.

According to an embodiment of the present invention, the discharge line 700 may include a first line 710 through which the product and the water vapor discharged through the discharge line 700 are transferred from the carbon dioxide electrolysis cell 1000 to the condensation part 750, and a second line 730 through which the product is discharged from the condensation part 750 to the outside. The condensation part 750 may be included in the discharge line 700 connected to the carbon dioxide electrolysis cell 1000, and may serve to connect the first line 710 and the second line 730. The first line 710 may serve to transfer the water vapor and the product produced by the electrical reaction from the region of the cathode 200 to the condensation part 750, and since the water vapor may participate in some reactions, some of the supplied amount of water vapor may be discharged. In addition, the second line 730 may serve to discharge the product and the ion material produced by dissolving the salt from the condensation part 750 to the outside.

Meanwhile, the discharge line 700-1 in the conventional carbon dioxide electrolysis device generally has a simple straight tube shape, and has only the function of discharging the product of the electrolysis reaction. On the other hand, since the discharge line 700 in the carbon dioxide electrolysis device of the present invention has a structure in which the condensation part 750 is disposed and connected between the first line 710 and the second line 730, it is not necessary to dispose the condensation part 750 in an additional space outside the discharge line 700, the product may be discharged to the outside without a plurality of separate discharge lines 700, and the salt produced as a by-product during the electrolysis reaction may be removed.

According to an embodiment of the present invention, the condensation part 750 may be connected so that a step between the first line 710 and the second line 730 is formed, and the second line 730 may be disposed higher than the first line 710 due to the step. The carbon dioxide electrolysis device of the present invention includes the discharge line 700 having a step structure of the first line 710 and the second line 730, and thus may include the condensation part 750 and the storage part 770 simultaneously without installing an additional space and device in the discharge line 700.

Meanwhile, in the case of the discharge line 700-1 of the conventional carbon dioxide electrolysis device, since the purpose is to discharge the produced gaseous products to the outside, it is common to have a straight tube structure. On the other hand, the discharge line 700 of the carbon dioxide electrolysis device of the present invention may serve as a kind of filtering or threshold by connecting the first line 710 connected to the carbon dioxide electrolysis cell 1000 and the second line 730 for discharging the product to the outside via the condensation part 750 and forming a step such that the second line 730 is disposed higher than the first line 710. Specifically, the product produced through the carbon dioxide electrolysis reaction may be carbon monoxide or hydrogen gas, and the product and the unreacted carbon dioxide gas may be discharged together. On the other hand, the salt produced as a by-product of electrolysis is produced by reacting the cations of the electrolyte 400 with the carbon dioxide to be ionic-bonded, and has a solid phase. Therefore, the gaseous product produced by the electrolysis reaction may be discharged to the outside through the discharge line, and the salt produced as a by-product during the electrolysis reaction may not be discharged to the outside due to the step and may be dissolved by being in contact with the water in the storage part 770. The height of the step may be a height capable of discharging the gaseous product and storing water produced by the condensation of the water vapor to be brought into contact with the salt, and there is no limitation.

### Carbon Dioxide Electrolysis Method

A carbon dioxide electrolysis method may include the steps of: (S1) supplying gaseous carbon dioxide and water vapor to a cathode 200 of a carbon dioxide electrolysis cell 1000 including an anode 100, the cathode 200, an electrolyte 400, and a membrane 300; (S2) electrolyzing the carbon dioxide supplied to the cathode 200 in step (S1) above; (S3) discharging, into the outside of the carbon dioxide electrolysis cell 1000, the product produced by the electrolysis in step (S2) above and the water vapor supplied in step (S1) above; and (S4) condensing the water vapor discharged in step (S3) above.

According to an embodiment of the present invention, the water formed by condensing the water vapor discharged in step (S4) above may dissolve the salt produced from the electrolyte 400 by electrolysis in step (S2) above.

Meanwhile, in the conventional carbon dioxide electrolysis method, cations included in the electrolyte 400-1 move to the region of the cathode through the membrane 300-1, react with the supplied carbon dioxide, and precipitates a salt. Since the salt is present in a solid form in the catalyst layer 230-1 and the gas diffusion layer 210-1 of the conventional carbon dioxide electrolysis device, and is accumulated in the supply line 500-1 or the discharge line 700-1, there are disadvantages in that the efficiency decreases as the experiment or research is progressed for a long period of time, carrying out a long-term continuous experiment or research is limited, and it is difficult to maintain the production amount of the product at a constant level. In addition, since an additional salt removal device or water treatment device should be provided or a method of directly removing a salt should be used in order to remove the salt, there are limitations in that it is inefficient in terms of device facilities and the volume of the device itself may be enlarged.

In order to solve the above limitations, the carbon dioxide electrolysis method of the present invention may effectively remove the salt by condensing the water vapor and converting the condensed water vapor into water when discharging the water vapor supplied together with the carbon dioxide and the product produced by the electrolysis.

The carbon dioxide electrolysis method of the present invention produces water by condensing the water vapor when the product and the water vapor are discharged, and removes salt by dissolving, thereby simplifying the process without the inconvenience of requiring a conventional complex and additional device, and enabling continuous long-term experiment and research.

Also, the carbon dioxide electrolysis method of the present invention may increase the amount of carbon dioxide supplied by supplying carbon dioxide and water vapor together, thereby increasing the amount of carbon monoxide produced, and since the carbon dioxide electrolysis method condenses the water vapor by using the supplied water vapor, there is no need to supply additional water for dissolving a salt when discharging the product and water vapor, thereby improving process efficiency.

According to an embodiment of the present invention, the salt may be produced by the reaction of the electrolyte 400 with the supplied carbon dioxide, and the salt may be KHCO₃ and K₂CO₃. Specifically, since KOH is used as an electrolyte in the carbon dioxide electrolysis method of the present invention, potassium ions may react with carbon dioxide to produce potassium carbonate salts.

Hereinafter, examples of the present invention will be described in detail in such a manner that it may easily be carried out by a person of an ordinary skill in the art to which the present invention pertains. The invention may, however, be embodied in many different forms and should not be construed as being limited to the examples set forth herein.

### Example 1

As illustrated in FIG. 1, a carbon dioxide electrolysis device for producing carbon monoxide by electroreducing carbon dioxide was manufactured. The carbon dioxide electrolysis device includes a condensation part 750 in a discharge line 700, and carbon dioxide electrolysis was performed by adjusting the operation conditions of the carbon dioxide electrolysis device as follows.
Reaction current density: 200 mA/cm² (constant current operation)
Reaction voltage: 3-3.5 V
Reaction temperature: 40 °C
Reaction pressure: 1 atm (normal pressure)
Membrane: anion exchange membrane (Sustainion X37, Dioxide Materials)
Anode catalyst: RuO₂ + CeO₂ on Ni mesh
Cathode catalyst: Ag powder
Electrode area: 100 cm²
Gas diffusion layer: Sigracet 39BB
Anode electrolyte: 1 M KOH (200 mL/min)
Cathode reactant: 40 °C Humidified CO₂ Gas (800 ccm)
Form of transfer line: parallel type
Cross-sectional area of transfer line: 0.55 mm²
During the electrolysis, a conversion rate (%) of carbon monoxide, CO Faraday efficiency (%), and a voltage were measured.

### Example 2

A conversion rate (%) of carbon monoxide, CO Faraday efficiency (%), and a voltage during the electrolysis were measured in the same manner as in Example 1 above, except that a reaction current density was set as 300 mA/cm².

### Example 3

A conversion rate (%) of carbon monoxide, CO Faraday efficiency (%), and a voltage during the electrolysis were measured in the same manner as in Example 1 above, except that 1 M KHCO₃ (200 mL/min) was used as an anode electrolyte.

### Example 4

A conversion rate (%) of carbon monoxide, CO Faraday efficiency (%), and a voltage during the electrolysis were measured in the same manner as in Example 1 above, except that the form of the transfer line changed from a parallel type to a serpentine type having a repeated "S" shape.

### Example 5

A conversion rate (%) of carbon monoxide, CO Faraday efficiency (%), and a voltage during the electrolysis were measured in the same manner as in Example 4 above, except that a reaction current density was set as 300 mA/cm².

### Example 6

A conversion rate (%) of carbon monoxide, CO Faraday efficiency (%), and a voltage during the electrolysis were measured in the same manner as in Example 1 above, except that the cross-sectional area of the transfer line was changed to 0.75 mm².

### Example 7

A conversion rate (%) of carbon monoxide, CO Faraday efficiency (%), and a voltage during the electrolysis were measured in the same manner as in Example 6 above, except that a reaction current density was set as 300 mA/cm².

### Example 8

A conversion rate (%) of carbon monoxide, CO Faraday efficiency (%), and a voltage were measured in the same manner as in Example 1 above, except that the anode catalyst was changed from RuO₂ + CeO₂ on Ni mesh to IrO₂-Ti mesh.

### Example 9

A conversion rate (%) of carbon monoxide, CO Faraday efficiency (%), and a voltage during the electrolysis were measured in the same manner as in Example 8 above, except that a reaction current density was set as 300 mA/cm².

### Comparative Example 1

A conversion rate (%) of carbon monoxide, CO Faraday efficiency (%), and a voltage during the electrolysis were measured in the same manner as in Example 1 above, except that the condensation part was not included.

### * Measurement methods

### (1) Conversion rate (%) of carbon monoxide

A conversion rate (%) was calculated by a rate of the amount of the produced carbon monoxide (CO) to the amount of carbon dioxide (CO₂) gas introduced per hour.

### (2) CO Faraday efficiency (%)

A gas composition in the discharge line was measured by gas-chromatography (GC) analysis. In addition, the Faraday efficiency was calculated by Equation below: FEproduct (%) = (iproduct/itotal)×100 = [(Vproduct × Q × (2Fp/RT))/itotal] × 100

In Equation 1 above, Q is a flow rate in the discharge line, F is the Faraday constant, p is a pressure, T is a measured temperature, and R is the ideal gas constant. The total current (iₜₒₜₐₗ) is a value of the total current applied over time, and the current for the product (i_{product}) was a value calculated from a volume (V_{product}) of gas measured by the GC analysis.

### (3) Voltage (V)

The application of current and the measurement of voltage were performed through VSP potentiostat made by BioLogic. A booster of 80 A was installed to apply a current corresponding to a large area. The application of the current was maintained in stages at 100 mA/cm², 200 mA/cm², and 300 mA/cm² for a certain period of time, and then the voltage was recorded at the time point when 10 minutes elapsed. At the time, gas-chromatography (GC) analysis was also performed simultaneously.

**[Table 1]**

| Divis ion | Exa mpl e 1 | Exa mpl e 2 | Exa mpl e 3 | Exa mpl e 4 | Exa mpl e 5 | Exa mpl e 6 | Exa mpl e 7 | Exa mpl e 8 | Exa mpl e 9 | Compa rativ e Examp le 1 |
|---|---|---|---|---|---|---|---|---|---|---|
| Curre nt densi ty | 200 mA/ cm² | 300 mA/ cm² | 200 mA/ cm² | 200 mA/ cm² | 300 mA/ cm² | 200 mA/ cm² | 300 mA/ cm² | 200 mA/ cm² | 300 mA/ cm² | 200 mA/cm² |
| Conve rsion rate (%) of carbo n monox ide | 17. 5 | 24. 9 | 17. 2 | 15. 1 | 23. 2 | 18. 4 | 26. 9 | 17. 1 | 24. 9 | 15.2 |
| CO Farad ay effic iency (%) | 91. 6 | 86. 8 | 95. 6 | 78. 4 | 80. 16 | 95. 5 | 92. 9 | 93. 1 | 90. 2 | 41.5 |
| Volta ge (V) | - 3.0 7 | - 3.6 0 | - 3.3 2 | - 2.8 0 | - 3.1 8 | - 2.5 8 | - 2.9 4 | - 3.2 8 | - 3.4 7 | -3.22 |

Referring to Table 1, Comparative Example 1, in which the condensation part is not included in the discharge line, shows results of being inferior in terms of a conversion rate of carbon monoxide, CO Faraday efficiency, and a voltage to those of Examples 1 to 6 including the condensation part. In addition, it may be confirmed that Example 4 shows the conversion rate of carbon monoxide similar to that of Comparative Example 1, but shows better result values in terms of CO Faraday efficiency and a voltage. Through the above results, it may be confirmed that the condensation part of the discharge line is disposed and the salt is removed, thereby maintaining a high conversion rate of carbon monoxide and CO Faraday efficiency without overvoltage.

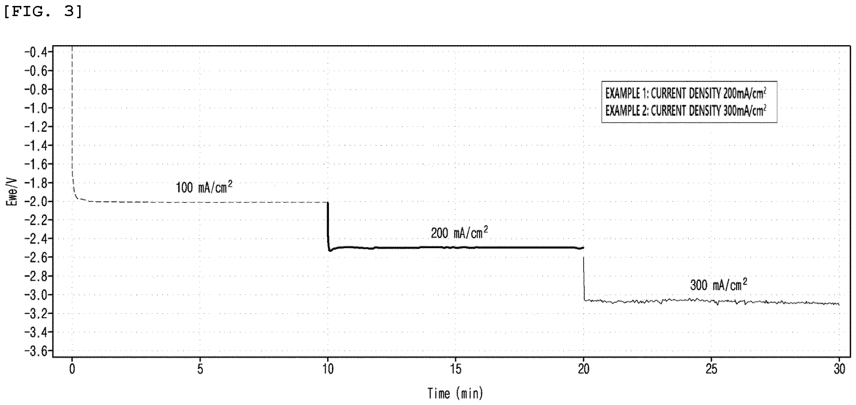

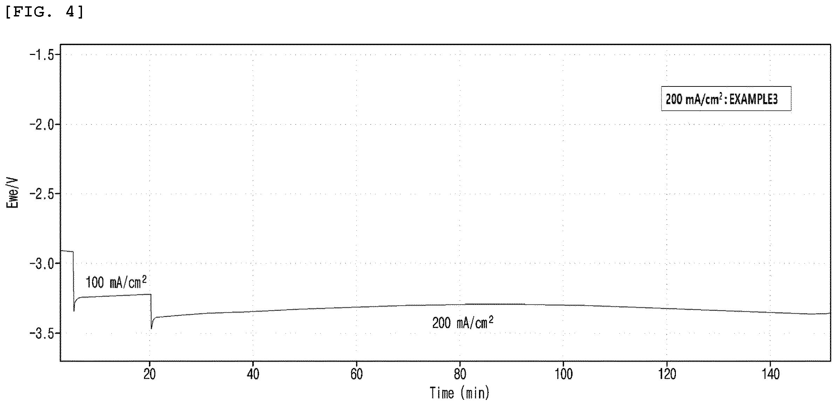

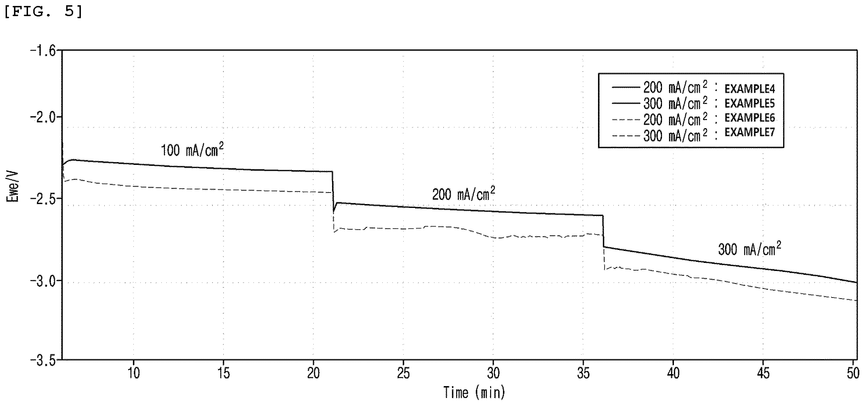

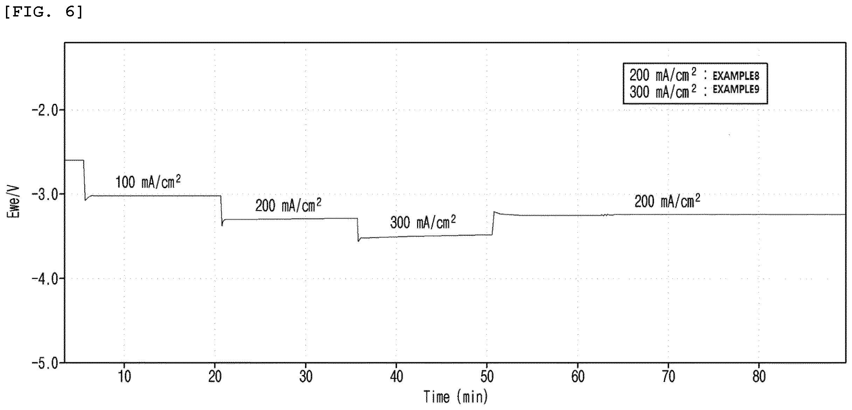

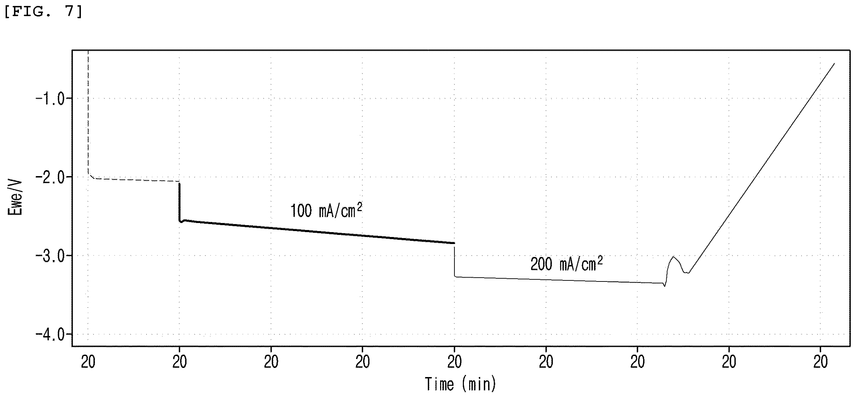

In addition, FIGS. 3 to 6 show the voltage changes over time of Examples 1 to 6, and FIG. 7 shows the voltage change over time of Comparative Example 1. Referring to FIGS. 3 to 7, it may be confirmed that in Comparative Example 1, the supply line and the discharge line are blocked by the salt produced during the electrolysis, causing abnormalities in supply and flow, and rapidly changing the voltage over time. On the other hand, it may be confirmed that in each Example, the conversion of carbon monoxide is smoothly performed while the voltage change is not large over time.
100: Anode
200: Cathode
210: Gas diffusion layer
230: Catalyst layer
300: Membrane
400: Electrolyte
1000: Carbon dioxide electrolysis cell
500: Supply line
600: Transfer line
700: Discharge line
710: First line
730: Second line
750: Condensation part
770: Storage part
100-1: Anode of conventional carbon dioxide electrolysis device
200-1: Cathode of conventional carbon dioxide electrolysis device
210-1: Gas diffusion layer of conventional carbon dioxide electrolysis device
230-1: Catalyst layer of conventional carbon dioxide electrolysis device
300-1: Membrane of conventional carbon dioxide electrolysis device
400-1: Electrolyte of conventional carbon dioxide electrolysis device
1000-1: Carbon dioxide electrolysis cell of conventional carbon dioxide electrolysis device
500-1: Supply line of conventional carbon dioxide electrolysis device
600-1: Transfer line of conventional carbon dioxide electrolysis device
700-1: Discharge line of conventional carbon dioxide electrolysis device

## Claims

1. A carbon dioxide electrolysis device comprising:
a carbon dioxide electrolysis cell including an anode, a cathode, an electrolyte, and a membrane disposed between the anode and the cathode;
a supply line configured to supply gaseous carbon dioxide and water vapor to the cathode; and
a discharge line configured to discharge, into the outside of the carbon dioxide electrolysis cell, water vapor and a product produced by the electrolysis reaction of the carbon dioxide inside the carbon dioxide electrolysis cell,
wherein the discharge line comprises a condensation part configured to condense the water vapor discharged through the discharge line.

2. The carbon dioxide electrolysis device of claim 1, wherein the gaseous carbon dioxide is supplied while comprising the water vapor.

3. The carbon dioxide electrolysis device of claim 1, wherein the water vapor supplied through the supply line has a temperature of 40 °C to 60 °C.

4. The carbon dioxide electrolysis device of claim 1, wherein the condensation part is exposed to the outside of the carbon dioxide electrolysis cell.

5. The carbon dioxide electrolysis device of claim 1, wherein the condensation part comprises a storage part configured to store water formed by condensing the water vapor discharged through the discharge line.

6. The carbon dioxide electrolysis device of claim 1, wherein the discharge line comprises:
a first line which transfers the product and the water vapor discharged through the discharge line from the carbon dioxide electrolysis cell to the condensation part; and
a second line which discharges the product from the condensation part into the outside.

7. The carbon dioxide electrolysis device of claim 6, wherein the condensation part is connected so that a step is formed between the first line and the second line.

8. The carbon dioxide electrolysis device of claim 7, wherein the second line is disposed higher than the first line by the step.

9. A carbon dioxide electrolysis method comprising the steps of:
(S1) supplying gaseous carbon dioxide and water vapor to a cathode of a carbon dioxide electrolysis cell including an anode, the cathode, an electrolyte, and a membrane;
(S2) electrolyzing the carbon dioxide supplied to the cathode in step (S1) above;
(S3) discharging, into the outside of the carbon dioxide electrolysis cell, the product produced by the electrolysis in step (S2) above and the water vapor supplied in step (S1) above; and
(S4) condensing the water vapor discharged in step (S3) above.

10. The carbon dioxide electrolysis method of claim 9, wherein water formed by condensing the water vapor discharged in step (S4) above dissolves the salt produced from the electrolyte by the electrolysis in step (S2) above.

11. The carbon dioxide electrolysis method of claim 10, wherein the salt is produced by the reaction of the electrolyte with the supplied carbon dioxide.

12. The carbon dioxide electrolysis method of claim 10, wherein the salt is KHCO₃ and K₂CO₃.
